# EUROPEAN PATENT APPLICATION

(11) **EP 1 637 880 A1**
(43) Date of publication of application: **22.03.2006**
(21) Application number: 04405591.1
(22) Date of filing: 17.09.2004
(51) Int. Cl.: G01N 33/48, G01N 33/50, A23L 1/302

(54) **Method for analysing and treating human milk and system therefor**

(71) Applicant: Medela Holding AG, 6340 Baar (CH)
(72) Inventor: Hartmann, Peter Edwin, Gooseberry Hill, WA 6076 (AU); Sherriff, Jillian Lois, Crawley, WA 6009 (AU); Lewis, Michelle Anne, Atwell, WA 6164 (AU); Davis, Bronwyn Estelle, Duncraig WA 6023 (AU); Lai, Ching Tat, Canning Vale, WA 6155 (AU); Simmer, Karen Norrie, Claremont, WA 6010 (AU); Mitoulas, Leon Robert, Osborne Park, WA 6017 (AU)
(74) Representative: Clerc, Natalia

(57) **Abstract**

The present invention relates to a method for analysing and treating human milk to be fed to an infant comprising the steps of
collecting own mother's milk, taking a sample of the collected own mother's milk,
conducting nutritional analysis on said sample, using the collected own mother's milk as nutrition for the infant and
using the collected own mother's milk in the form of at least one of the group of: unchanged own mother's milk, fortified own mother's milk, unchanged components of own mother's milk and fortified components of own mother's milk, wherein said form is chosen depending on at least some of said results of the analysis and said infant's condition, the infants condition being chosen from at least one of the following parameters: infant's age, infant's weight, infant's health, infant's shortcomings, infant's deficiencies, time of day when the milk is fed to the infant.

## Description

### TECHNICAL FIELD

The present invention relates to a method for analysing and treating human milk to be fed to an infant. It furthermore relates to a system for processing results of nutritional analysis of a sample of collected human milk.

### BACKGROUND OF THE INVENTION

Human milk is commonly recognized as the optimum feeding for infants due to its nutritional composition and immunological advantages. Milk from the infant's own mother is considered a desirable feeding for infants of all ages, but also for preterm, low-birth-weight infants in early newborn intensive care units.

If the infant can not be fed with his own mother's milk, donor milk is considered to be second best. However, it was found that donor milk does not always supply the appropriate mixture of nutrients and immunological components, especially for preterm infants.

It was also found, that preterm human milk is apparently lacking in several constituents such as calcium, phosphorus and protein. Thus, it has been recommended that when preterm infants are fed preterm human milk, the human milk be fortified to better meet the nutritional needs of the preterm infant. Liquid and powder forms of preterm milk fortifiers have been marketed domestically in response to this recognized need. They not only comprise protein, fat and carbohydrates, but also substantial amounts of minerals as well as vitamins. The fortifiers differ with respect to their form, source of ingredients and energy and nutrient composition. Generally one can say that powder products are advantageous to minimize the dilution of mother's milk, while if mom's milk supply is limited, a liquid fortifier may be used to stretch her supply of human milk.

Under certain conditions also term infants during some stage of their development need additives to the milk or supplemental feeding to get the optimum nutritional conditions for ideal growth and best resistance to illnesses.

Herewith explicit reference shall be made to a very comprehensive, detailed and general description of the problems and the present status of development in the field of human milk as given in the background portion of US 6,294,206.

Furthermore, US 2002/Ol 82243 discloses methods for isolating human milk comprising the steps of collecting a sample of human milk from a donor in a collection device, storing the sample of milk obtained from the donor and processing the milk sample by conducting a nutritional analysis on the milk sample, fortifying the sample with heat-resistant nutrients, pasteurising the sample, fortifying the pasteurised sample with heat-sensitive nutrients and testing the sample to ensure successful pasteurisation. The obtained product is stored in a milk bank for later use as nutrition for an infant. US 2002/0182243 also suggests to test and process mother's own milk at the hospital, designed to screen for the presence of the most common pathogens, drugs and contaminants. The mother's milk, intended for her own baby, is housed in a milk laboratory under optimum storage conditions.

The prior art therefore either suggests to use donor milk, which is well analysed and fortified, or to use mother's own milk. If own mother's milk is used, only the premature milk is fortified.

### SUMMARY OF THE INVENTION

It is an aim of the present invention to improve the nutrition of an infant.

This aim is achieved by a method for analysing and treating human milk to be fed to an infant comprising the steps of
collecting own mother's milk, taking a sample of the collected own mother's milk,
conducting nutritional analysis on said sample, using the collected own mother's milk as nutrition for the infant and
using the collected own mother's milk in the form of at least one of the group of: unchanged own mother's milk, fortified own mother's milk, enriched own mother's milk, deriched own mother's milk; wherein said form is chosen depending on at least some of said results of the analysis and said infant's condition, the infants condition being chosen from at least one of the following parameters: infant's age, infant's weight, infant's health, infant's shortcomings, infant's deficiencies, time of day when the milk is fed to the infant.

"Deriched" is used as an antonym to "enriched". It is depleted milk or milk of diminished constitution.

The invention further relates to a system for processing results of nutritional analysis of a sample of collected human milk comprising
a data processing device,
stored data related to recommended compositions of human milk which consider nutritional needs of infants in different conditions, the infants conditions being chosen from at least one of the following parameters: infant's age, infant's weight, infant's health, infant's shortcomings, infant's deficiencies, time of day when the milk is fed to the infant,
input means for entering data related to an infant to be fed with this collected human milk and
means for evaluating a recommended composition for said infant out of the group of said stored data related to recommended compositions,
means for comparing said evaluated recommended composition with said results of nutritional analysis,
means for evaluating changes to be made to the collected human milk in order to obtain a recommended composition and
output means for showing said changes to be made.

The analysis performed in the state of the art were performed on donor human milk and own mother's milk out of concerns about possible drugs, bacterial, viral and other contaminations. Further testing of own mother's milk was performed for research reasons in order to improve the knowledge about optimised nutrition of infants in general.

According to the process of this invention however, a sample of collected own mother's milk is analysed and the remaining collected own mother's milk is treated in such a way as to provide an optimised nutrition to the infant. This means, that each time before the infant is feed or at least on a periodically basis, the own mother's milk is tested and treated in order to meet the changing requirements of the infant. These requirements change with the development of the infant. They can however also be different depending on the time of day the infant is fed. Furthermore, they depend on the health state of the infant, for example if the infant has a cold, gets a new tooth or if he just grows quite quickly at the moment. The inventive process also allows to consider that the composition of the mother's milk can vary. It varies for example depending on the time of day, on the mother's health and on her diet.

The inventive process enables to combine the advantages of own mother's milk, such as the immunology advantages, with the advantages of modem design of human milk to improve nutrition of an infant, using for example fortifiers. Another advantage of the inventive process is, that changes in the mother's milk caused by the diet of the mother can be detected and the milk can be treated accordingly, giving the child the components needed and not being only dependent on the mother's diet.

In a first embodiment of the present invention, at least one data table is provided which lists recommended compositions of human milk considering the nutritional needs of infants in different stages of developments for healthy infants and for infants with diseases or shortcomings and which lists possible compositions of human milk and changes to be made thereof to achieve these recommended compositions.

According to a preferred embodiment of the invention, the results of the analysis are automatically processed in a data processing device and a recommendation how to use the own mother's milk for nutrition of the infant is given as output data.

According to another preferred embodiment of the invention, the analysis of the own mother's milk is performed automatically. In another preferred embodiment, the automatic analysis and processing of the results is done within the same apparatus.

According to a preferred embodiment of the invention, the own mother's milk is at least analysed in view of its content of calcium and phosphorus. An analysis for proteins can be performed as well. Other components which can be analysed are fat, protein and lactose. Milkoscan can be used to determine these three macro nutrients in human milk. sIgA, lactoferrin, lysozyme, alpha-lactalbumin, serum albumin, beta casein, kappa casein, c3 and c4 comlement can be measured at once with a method called 'Nephelometric Immunoassays'. This method is described in Montagne et al. 2000, "Measurement of nine human milk proteins by nephelometric immunoassays" in Application to the determination of mature milk protein profile, clinical biochemistry 33(30) 181-186. Zinc, sodium, chloride, fatty acid composition, oligosaccharide can be measured as well.

Further embodiments of the present invention are outlined in the dependent claims.

### DETAILED DESCRIPTION OF THE PREFERRED EMBODIMENTS

According to the invention, own mother's milk is collected before feeding an infant using a breast pump known in the state of the art. The collected milk is stored in a storage according to the state of the art. A sample is taken from the collected milk and nutritional analysis on said sample is conducted. At least the content of calcium and phosphorus are detected in this sample. Preferably, the analysis is performed with respect to at least one or a combination of the following group of constituents: calcium, phosphorus, lysomzyme, proteins, IgA, fat and/or the ones mentioned above in the summary of the invention. The analysis can be performed with known means and apparatus.

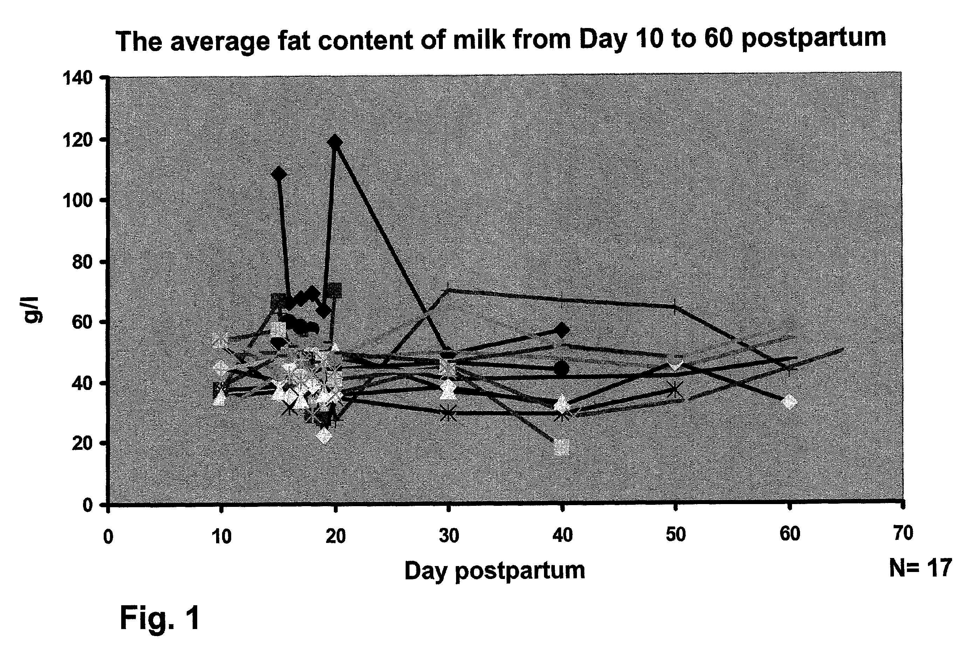

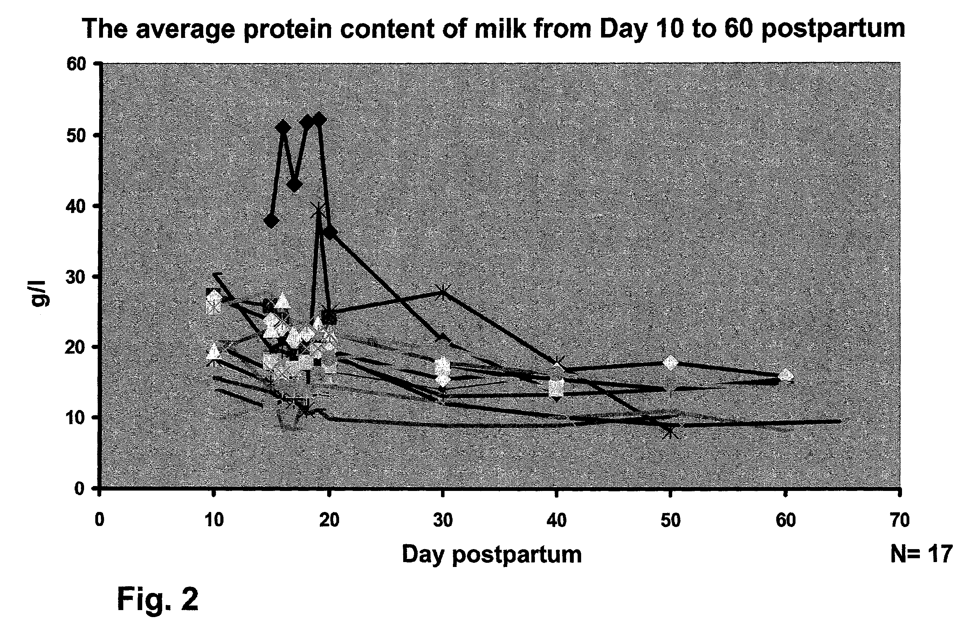

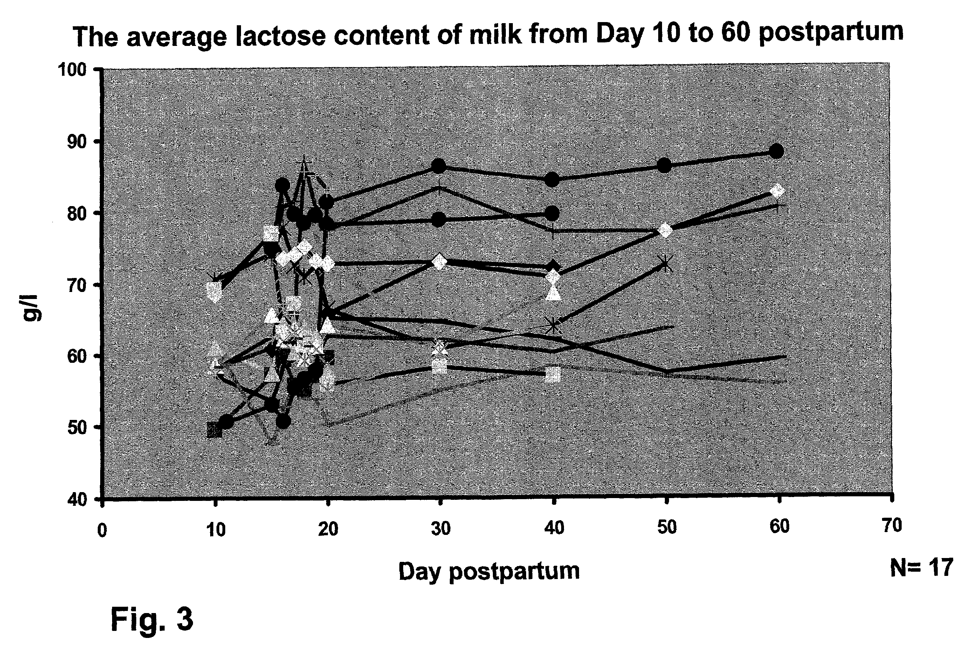

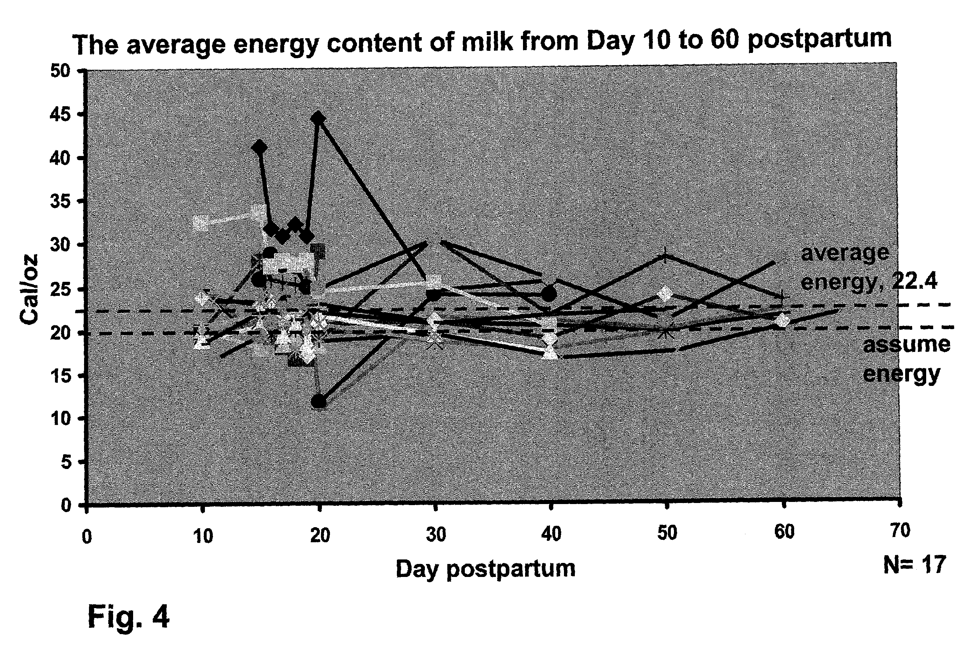

Figures 1 to 4 show the results of such analysis. Figure 1 shows an average fat content of mother's milk from day 10 to 60 postpartum for different mothers. Figure 2 shows an average protein content of mother's milk from day 10 to 60 postpartum for different mothers. Figure 3 shows an average lactose content of mother's milk from day 10 to 60 postpartum for different mothers. Figure 4 shows an average energy content of mother's milk from day 10 to 60 postpartum for different mothers.

The results of this analysis are used as a basis to decide, in which form the stored own mother's milk shall be fed to the infant. The form is thereby chosen from the group of unchanged own mother's milk, fortified own mother's milk, enriched mother's milk, deriched mother's milk. Enriched milk and deriched mother's milk can be for example milk, which lacks at least a part of some of its original constituents or which lacks at least a portion of such original constituents. If the infant has for example a lactose intolerance, the lactose in the milk can be reduced. This enriched or deriched milk can comprise supplements. However, it can also only consist of constituents which have already been present in the original collected milk.

The decision in which form the stored mother's milk shall be used is taken depending on at least some of said results of the analysis and said infant's condition. The data concerning the infants condition is chosen from at least one of the following parameters: infant's age, infant's weight, infant's health, infant's shortcomings, infant's deficiencies, time of day when the milk is fed to the infant.

If the mother's milk has on one day a volume of 300 ml and comprises 18.5 g lactose (74 cal), 2.4 g protein (9.6 cal) and 10.8 g fat (97 cal), then the total calories intake of the baby for this day is 180.6 cal or 18.6 cal/oz. The mother can then decide if this is sufficient for the baby or not. She can add fortifiers, enrich or derich the milk or feed it unchanged.

The own mother's milk can be tailored to fulfil the infants requirements. Different products can be obtained such as protein enriched milk, lactose free milk, sIgA rich milk.

For a preterm baby the recommended protein level is for example 2.5 g protein/kg/day, the recommended volume is <180 ml/kg/day and the recommended calories are 24cal/oz. This means for a preterm baby of 1.730 kg a protein level of 4.3 g/day and a volume of 294 (300) ml per day.

Preferably, the mother's milk is analysed each time before it is fed to the infant. However, it is also possible to analyse the milk only periodically or at a special collecting time of day. For example, when the infant is always not sleeping well during the night, the mother's milk which is supposed to be usually last fed can be analysed. It is also possible, to analyse the milk only during special condition times of the infant, for example when the infant is ill or when he receives a new tooth. Special analysing programs and agendas depending on the mother and infant's conditions can be established for individual mothers and infants in order to meet their needs.

In a preferred embodiment of this invention, the results of the analysis are compared with recommended compositions of human milk which consider nutritional needs of infants with respect to at least some of the above mentioned infants conditions. These recommended compositions can be listed in at least one data table. This table can be printed on paper or on another appropriate medium. It can however also be stored in electronic form, for example on a disk which can be read by a data processing system. Preferably, there exist different tables comprising different recommended compositions for different infants conditions, at least a table for a healthy infants and a table for infants with short-comings or for preterm infants.

As a result of this comparison, changes are suggested which should be made to the collected mother's milk before it is fed to the infant. In a preferred embodiment of this invention, there exists at least one data table comprising possible compositions of human milk, which can occur when the mother's milk is collected. Additionally, the table preferably comprises data concerning changes to the collected own mother's milk to be made thereof to achieve these recommended compositions. For example, when the sampled milk is short of calcium, the changes suggested are the amount of calcium which should be added to the stored collected milk.

Instead of using tables or in addition thereto the inventive method comprises in one embodiment the step of running an optimisation computer program for finding an optimised composition based on the analysed sample, wherein the optimisation computer program uses as input data at least nutritional needs of infants in different conditions. The optimisation program can however take into respect other parameters, such as the time of day the milk shall be fed and/or the additional food the infant is obtaining during the day, the mother's health and the nutrient status.

The above mentioned tables are preferably all electronically stored for use in a computer system comprising data processing means, so that they can be processed automatically and so that a recommendation in which form the milk shall be used can be given automatically. The recommendation is preferably an output data naming at least one of the following: the supplement or supplements to be added to the milk, the way how the milk should be processed to be enriched or deriched, the information that the milk can be used as such.

In a preferred embodiment, an apparatus or system is provided which in addition or separately can perform the analysis of the sample automatically. If the analysing apparatus is not an integral part of the system processing the results, the apparatus preferably comprises means to forward the results to the system and the system comprises means to read the forwarded data. These means are known in the state of the art, they can comprise data wires or they can also be wireless, they can for example comprise infrared interfaces. However, it is also possible to enter the results manually using as input means for example a knob or a keypad or key board. The inventive system comprises means for comparing the evaluated recommended composition with these results of nutritional analysis and also means for evaluating changes to be made to the collected human milk in order to obtain a recommended composition. These means can be known data processing means used in common data processing devices and do not have to be described in detail. The system comprises output means for showing the suggested changes so that the mother or a support person knows what has to be done with the collected milk before it is fed. These output means can be a printout or a display or screen.

The system preferably also comprises a storage for storing the obtained results and/or suggested changes for comparison with said evaluated recommended composition. In a preferred embodiment, the system also considers former results and/or former suggested changes before suggesting a new change to a newly collected and analysed milk sample. This helps to compensate measuring and analysing errors. It also ensures, that the infant is not fed milk which varies too much during the day, if this is not a preferred task of the special infants nutrition.

### Example 1

A liquid sample of human milk sample (100ml) was taken. The human milk was taken from a mother of a preterm baby at >10 days and <90 days, respectively, after birth. The milk sample was taken from milk that had been expressed from the breast over the course of a day. The principal composition of this milk can be summarised as follows: 3.8% fat, 0.8% protein and 5.2% carbohydrate. The actual energy content of the milk sample was determined. The non-aqueous (cream) fraction of the milk was separated from the aqueous fraction by centrifugation at 10'000 rpm and a temperature of 4°C and the top layer (the cream) was carefully removed and a known volume was added to 140ml of the mother's own milk to increase the energy content of her milk to the recommended level for a preterm baby of the particular weight and age.

The preterm infant's growth and development could be observed to be similar to the one occurring in utero.

In addition, there may be a pasteurization and a standard hospital grade of bacteria assessment.

### Example 2

A liquid sample of human milk sample (150ml) was taken. The human milk was taken from a mother of a special need baby (preterm or sick term baby) at >10 days and <90 days, respectively, after birth. The milk sample was taken from milk that had been expressed from the breast over the course of a day. The principal composition of this milk can be summarised as follows: 3.8% fat, 0.8% protein and 5.2% carbohydrate. The concentration of protein in the milk sample was determined. The non-aqueous (cream) fraction of the milk was separated from the aqueous fraction by centrifugation at 10'000 rpm and 4°C and the top layer (the cream) was carefully removed. The aqueous layer was then concentrated by passing it through a filter that was impervious to milk proteins. The filter used was a 30Kd Omega Ultrafiltration Tangential flow filtration membrane from Pall. The filtration was performed at a low temperature, i.e. 19°C. The aqueous fraction is concentrated by performing a couple of 9 hours run tests on the final set up. A mean level of protein content is obtained which is concentrated in each hour and the final product is analysed in order to obtain a true protein content. Once the aqueous fraction had been concentrated 5 fold a known volume of the concentrated milk protein was added to 130ml of mother's own milk to increase the protein content of the milk to the recommended level for a preterm baby or sick term baby of the particular weight and age.

The preterm infant's growth and development could be observed to be similar to the one occurring in utero and the term infant's growth and development could be observed to be similar to that of a term baby of a similar age.

In addition, there may be a pasteurization and a standard hospital grade of bacteria assessment.

### Example 3

A liquid sample of human milk sample (500ml) was taken. The human milk was taken from a human milk donor at <90 days after birth. The milk sample was taken from milk that had been expressed from the breast over the course of a few days and stored frozen. The principal composition of this milk can be summarised as follows: 3.8% fat, 0.8% protein and 5.2% carbohydrate. The concentration of protein in the milk sample was determined. The non-aqueous (cream) fraction of the milk was separated from the aqueous fraction by centrifugation at 10'000 rpm and 4°C and the top layer (the cream) was carefully removed. The aqueous layer was then concentrated by passing it through a filter that was impervious to milk proteins. Preferably the same type of filter and temperature were used as in example example 2. Once the aqueous fraction had been concentrated 5 fold in the same way as mentioned in example 2the concentrated solution was centrifuged at high speed, i.e. 210'000 rpm and 4°C,to precipitate the casein fraction. The casein fraction, in addition to protein, contains a large proportion of the calcium and phosphorus that is in breastmilk. This fraction was pasteurised at 60°C for 35 minutes (hold method) and stored frozen either as a liquid or dried powder until required. Measured amounts of this enriched protein/calcium/phosphorus fraction was used to fortify mother's own milk for either preterm or sick term infants to restore their calcium and phosphorus balance. The preterm infant's growth and development could be observed to be similar to the one occurring in utero and the term infant's growth and development could be observed to be similar to that of a term baby of a similar age.

### Example 4

A liquid sample of human milk sample (1000ml) was taken. The human milk was taken from a mother of a preterm baby at >10 days and <90 days, respectively, after birth. The milk sample was taken from milk that had been expressed from the breast over the course of a few days and stored frozen. The principal composition of this milk can be summarised as follows: 3.8% fat, 0.8% protein and 5.2% carbohydrate. The concentration of protein in the milk sample was determined. The non-aqueous (cream) fraction of the milk was separated from the aqueous fraction by centrifugation at 10'000 rpm and 4°C and the top layer (the cream) was carefully removed. The aqueous layer was then concentrated by passing it through a filter that was impervious to milk proteins. The same type of filter and temperature were used as in example 2. The aqueous fraction was concentrated 5 fold in the same way as mentioned in example 2, and then passed through an affinity column of Pharamcia to separate the sIgA and lysozyme. The sIgA and lysozyme solutions were then pasteurised at 60°C for 35 minutes (hold method) and stored frozen as a liquid until required. Measured amounts of either the concentrated sIgA or lysozyme solutions were used to fortify the breastmilk of mothers who had low concentrations of either sIgA or lysozyme in their milk.

The number of episodes of wheezing and respiratory tract infections in the first 12 months of life in the supplemented infants could be observed and compared to exclusively breastfed infants whose mothers have above average concentrations of sIgA and lysozyme in their milk.

It is possible to add human milk during ultrafiltration or to use reverse osmosis for further concentrate protein. Reverse osmosis has the advantage that it is faster than ultrafiltration.

## Claims

1. A method for analysing and treating human milk to be fed to an infant comprising the steps of
collecting own mother's milk, taking a sample of the collected own mother's milk,
conducting nutritional analysis on said sample, using the collected own mother's milk as nutrition for the infant and
using the collected own mother's milk in the form of at least one of the group of: unchanged own mother's milk, fortified own mother's milk, enriched mother's milk, deriched mother's milk, wherein said form is chosen depending on at least some of said results of the analysis and said infant's condition, the infants condition being chosen from at least one of the following parameters: infant's age, infant's weight, infant's health, infant's shortcomings, infant's deficiencies, time of day when the milk is fed to the infant.

2. The method according to claim 1, comprising analysing and treating the own mother's milk periodically before feeding it to the infant.

3. The method according to claim 1, comprising analysing and treating the own mother's milk each time before feeding it to the infant.

4. The method according to claim 1, further comprising the steps of providing at least one data table, the at least one data table listing recommended compositions of human milk which consider nutritional needs of infants with respect to infants condition as well as listing possible compositions of human milk and changes to the collected own mother's milk to be made thereof to achieve these recommended compositions.

5. The method according to claim 4, further comprising the step of providing in this at least one data table different data of recommended compositions of human milk for nutrition of healthy infants and infants with diseases or shortcomings.

6. The method according to claim 1, further comprising providing a data processing apparatus for automatically processing the results of the analysis and automatically giving as output data a recommendation based on said results how to use the collected own mother's milk for nutrition of the infant.

7. The method according to claim 1, further comprising performing the analysis of the own mother's milk automatically.

8. The method according to claim 6 and 7, further comprising analysing the sample and processing the results in the same apparatus.

9. The method according to claim 1, further comprising analysing the sample with respect to at least one or a combination of the following group of constituents: calcium, phosphorus, Iysomzyme, proteins, IgA, fat, protein and lactose, sIgA, lactoferrin, lysozyme, alpha-lactalbumin, serum albumin, beta casein, kappa casein, c3 and c4 complement, zinc, sodium, chloride, fatty acid composition, oligosaccharide

10. The method according to one of claims 1 to 9, further comprising running an optimisation program for finding an optimised composition based on the analysed sample, wherein the optimisation program uses as input data at least nutritional needs of infants in different conditions.

11. A system for processing results of nutritional analysis of a sample of collected human milk comprising
a data processing device,
stored data related to recommended compositions of human milk which consider nutritional needs of infants in different conditions, the infants condition being chosen from at least one of the following parameters: infant's age, infant's weight, infant's health, infant's shortcomings, infant's deficiencies, time of day when the milk is fed to the infant,
input means for entering data related to an infant to be fed with this collected human milk and
means for evaluating a recommended composition for said infant out of the group of said stored data related to recommended compositions,
means for comparing said evaluated recommended composition with said results of nutritional analysis,
means for evaluating changes to be made to the collected human milk in order to obtain a recommended composition and
output means for showing said changes to be made.

12. The system according to claim 11 wherein the system comprises input means for entering at least one of said results of the nutritional analysis of the sample.

13. The system according to claim 11 wherein the system comprises an apparatus for analysing the sample of human milk and wherein the results are stored in the apparatus for comparison with said evaluated recommended composition.

14. The system according to claim 11 wherein the systems comprising storing means for storing a history of the results and evaluated changes.

15. The system according to claim 12 wherein the system comprises stored data tables possible compositions of human milk.

16. The system according to claim 15 wherein the system comprises stored data related to possible changes to be made to the possible composition of human milk in order to achieve recommended compositions.

17. The system according to one of claims 11 to 16 wherein the system comprises stored data of recommended compositions of human milk for nutrition being specifically adopted for healthy infants and for infants with diseases or shortcomings.
